Europäisches Patentamt

European Patent Office

Office européen des brevets

(19)

(11) Numéro de publication : **0 295 164 B1**

# FASCICULE DE BREVET EUROPEEN

(12)

(45) Date de publication du fascicule du brevet :
**09.10.91 Bulletin 91/41**

(51) Int. Cl.⁵ : **G11B 20/12**, G11B 27/30,
G11B 5/596

(21) Numéro de dépôt : **88401246.9**

(22) Date de dépôt : **20.05.88**

(54) **Mode d'écriture d'informations de synchronisation sur un support d'enregistrement magnétique.**

(30) Priorité : **27.05.87 FR 8707515**

(43) Date de publication de la demande :
**14.12.88 Bulletin 88/50**

(45) Mention de la délivrance du brevet :
**09.10.91 Bulletin 91/41**

(84) Etats contractants désignés :
**DE FR GB IT NL**

(56) Documents cités :
**EP-A- 0 013 326**
**EP-A- 0 130 248**
**EP-A- 0 159 720**
**GB-A- 1 307 451**
**US-A- 4 669 003**

(56) Documents cités :
**NEUES AUS DER TECHNIK, no. 3, 15 juin 1979,
page 4, Würzburg, DE;
"Servospurkodierungsmuster"
IEEE TRANSACTIONS ON MAGNETICS, vol.
MAG-17, no. 4, juillet 1981, pages 1396-1402,
IEEE, New York, US; C. MAURY: "High track
density for magnetic disk drives with an
"embedded servo" positioning system"**

(73) Titulaire : **BULL S.A.
121 avenue de Malakoff P.B. 193.16
F-75764 Paris Cédex 16 (FR)**

(72) Inventeur : **Pinson, Denis
Chemin de Justice Goupillières
F-78770 Thoiry (FR)**

(74) Mandataire : **Gouesmel, Daniel et al
BULL S.A. Industrial Property Department
P.C.: HQ 8M006 B.P. 193.16 121 avenue de
Malakoff
F-75764 Paris Cédex 16 (FR)**

## Description

La présente invention concerne un mode d'écriture d'informations sur un support d'enregistrement magnétique. Elle est plus particulièrement applicable aux mémoires à disques magnétooptiques.

Dans les systèmes de traitement de l'information, l'évolution technologique est telle que l'on tend à utiliser de plus en plus fréquemment les mémoires à disques magnétooptiques en raison du grand nombre d'informations qu'elles peuvent contenir par unité de surface. Ce sont des mémoires où les informations sont enregistrées sur des disques magnétiques (par exemple au moyen de transducteurs magnétiques) et lues par des dispositifs opto-électroniques.

Leur mode de fonctionnement repose sur l'effet magnétooptique qui concerne l'interaction d'un lumière polarisée rectiligne avec l'état magnétique du matériau constituant la couche d'enregistrement des disques magnétiques. La lecture des informations est effectuée par un dispositif opto-électronique comprenant un dispositif optique de focalisation plus ou moins complexe associé à des transducteurs photo-électroniques et des circuits d'amplification des signaux délivrés par ces transducteurs. Ces dispositifs opto-électroniques permettent d'observer à un moment donné, en un endroit donné, une face d'un disque au moyen d'un faisceau de lumière polarisée et de délivrer un signal électrique dont la tension (ou le courant) est fonction de la valeur des informations situées à cet endroit. De plus amples détails sur l'effet magnétooptique et sur la manière dont peuvent être lues les informations contenues sur des disques magnétiques d'une mémoire magnétooptique, sont donnés dans le brevet français 2514913 déposé par la Compagnie Internationale pour l'Informatique CII HONEYWELL BULL le 16 octobre 1981.

On sait que les disques magnétiques portent ces informations sous forme codée binaire sur des pistes d'enregistrement concentriques circulaires dont la largeur est de l'ordre de quelques micromètres et qui sont disposées sur leurs deux faces.

Chaque piste est repérée par un numéro d'ordre j, j étant un nombre entier variant de zéro à N − 1, N étant le nombre total des pistes d'enregistrement. Ce nombre de pistes est de l'ordre de plusieurs milliers. On appelle adresse l'expression codée du numéro d'ordre j d'une piste. Dans ce cas, l'adresse est dite "adresse absolue".

Les disques magnétiques ont une vitesse de rotation constante.

Dans la pratique des mémoires à disques classiques (où les informations sont écrites et lues par un même transducteur magnétique) et plus spécialement dans le cas des mémoires qui ne comportent qu'un nombre limité de disque (généralement inférieur à 4 ou 5), les informations sont enregistrées sur chacune des faces des disques de la manière décrite dans le brevet français 2439435 déposé le 19 octobre 1978. Un maximum de place est réservé à l'enregistrement des données (data selon la terminologie anglo-saxonne) destinées à être traitée par le système de traitement de l'information auquel ces mémoires appartiennent.

Un minimum de place est réservé d'une part à l'enregistrement des adresses des pistes et d'autre part à l'enregistrement d'informations nécessaires à l'asservissement de position au-dessus des pistes du transducteur magnétique associé à cette face, ces informations étant encore appelées "information de position fine".

Dans la pratique courante, ainsi qu'il est décrit dans le brevet mentionné ci-dessus, les informations contenues sur chaque face du disque sont de préférence réparties sur des secteurs circulaires égaux et adjacents $S_0$, $S_1$, ..., $S_i$, ..., $S_n$. Habituellement, une face du disque est divisée en plusieurs de dizaines de secteurs (de l'ordre par exemple de 80 à 90 secteurs).

Lorsqu'un secteur $S_i$ (ou plus généralement un premier groupe d'informations) est lu ou écrit avant un secteur $S_{i+1}$ (ou plus généralement un second groupe d'informations), on dit que le secteur $S_i$ précède le secteur $S_{i+1}$.

Chaque secteur $S_i$ est lui-même divisé en deux aires inégales. L'aire la plus grande comprend les données destinées à être traitées par le système de traitement de l'information auquel appartient la mémoire à disques tandis que l'aire la plus petite comprend les adresses des pistes et les informations de position fine. Pour chaque secteur, l'aire la plus petite est divisée en plusieurs zones appelées zones de référence. Chaque piste est associée à au moins une zone ayant même numéro d'ordre j que celle-ci.

Une zone de blanc ne contenant aucune information est disposée entre l'aire la plus grande et l'aire la plus petite. Elle précède cette dernière.

On sait que, pour enregistrer une suite d'informations sur un disque magnétique on crée sur chaque piste de celui-ci une succession de petits domaines magnétiques adjacents de longueur variable réparties sur toute la longueur de la piste et ayant alternativement des aimantations de même module et de sens opposé. La frontière géographique entre deux domaines magnétiques adjacents est appelée transition magnétique.

Chaque zone de référence comprend trois parties, à savoir, une première partie dite de préambule précédant une seconde partie contenant des informations d'adresse, elle-même précédant une troisième partie comprenant des informations de position fine. La partie préambule contient des informations dont l'exploitation par les circuits de lecture de la mémoire à disque permet de déterminer le gain des amplificateurs de ces circuits de telle sorte que la précision de lecture des adresses et des informations de position fine soit la plus grande possible. Une petite partie de ces informations placée au début de la partie préambule (une ou deux informations généralement) peut également servir d'informations de synchronisation permettant de déterminer le début de chaque zone de référence.

Le mode d'écriture brièvement rappelé ci-dessus utilisé dans les mémoires à disques classiques est transposable et applicable aux mémoires à disques magnétooptiques à condition de surmonter l'inconvénient suivant :

— La partie contenant des informations de préambule est mal adaptée à son utilisation dans les mémoires à disques magnétooptiques. En effet, les disques utilisés dans ces mémoires présentent un taux d'erreurs de l'ordre de $10^{-5}$ (une erreur sur $10^5$ informations écrites) considéré comme relativement élevé. La première partie contenant les informations de préambule servant simultanément d'une part à contrôler le gain des amplificateurs des circuits de lecture et d'autre part, à déterminer le début de la zone, n'offre pas de garanties suffisantes pour une détection précise de la zone de référence, eu égard au taux d'erreurs indiqué ci-dessus.

Le mode d'écriture d'informations dans une zone de référence selon l'invention est particulièrement bien adapté pour la détection précise des zones de référence, en remédiant à l'inconvénient mentionné ci-dessus.

Selon l'invention, le mode d'écriture d'informations de synchronisation sur un support d'enregistrement magnétique où les informations sont écrites en code binaire et réparties sur une pluralité N de pistes, chaque piste étant associée à au moins une zone de référence, qui comprend un groupe d'informations de préambule, un groupe d'informations d'adresses absolues et un groupe d'informations de position fine, le groupe d'informations de préambule comprenant un premier sous-groupe d'informations de synchronisation précédant un second sous-groupe de contrôle automatique de gain.

Selon le mode de réalisation de l'invention, le sous-groupe d'informations de synchronisation est constitué par une séquence binaire pseudo-aléatoire pour laquelle la fonction d'autocorrélation est pratiquement nulle lorsque le décalage temporel entre, d'une part la séquence de signaux lue par le dispositif de lecture du support correspondant à la dite séquence binaire et d'autre part, une séquence de référence contenue dans les circuits de gestion de la mémoire contenant le support d'enregistrement magnétique, n'est pas nul ; cette fonction étant voisine de 1 si ce décalage est quasiment nul.

La présente invention ressortira plus clairement de la description qui suit, faite à titre d'exemple en se référant aux dessins annexés.

Sur ces dessins :

— La figure 1 : composée des figures 1a, 1b, 1c montre un exemple préféré de répartition d'informations sur un disque magnétique, selon l'art antérieur telle que décrit dans le brevet 2439435 précité, la figure 1c étant une vue aggrandie d'une partie de la figure 1a, la figure 1b montrant plus en détail une portion du disque.

— La figure 2 : montre un ensemble de trois zones de référence où les informations sont écrites selon le mode d'écriture de l'invention,

— La figure 3 : montre comment on calcule une fonction d'autocorrélation,

— La figure 4 : montre un sous-groupe d'informations de synchronisation selon l'invention constitué par une séquence binaire pseudo-aléatoire.

— Les figures 5, 6 et 7 : montrent comment en détecte le début d'une zone de référence au moyen d'un sous-groupe d'informations de synchronisation selon l'invention.

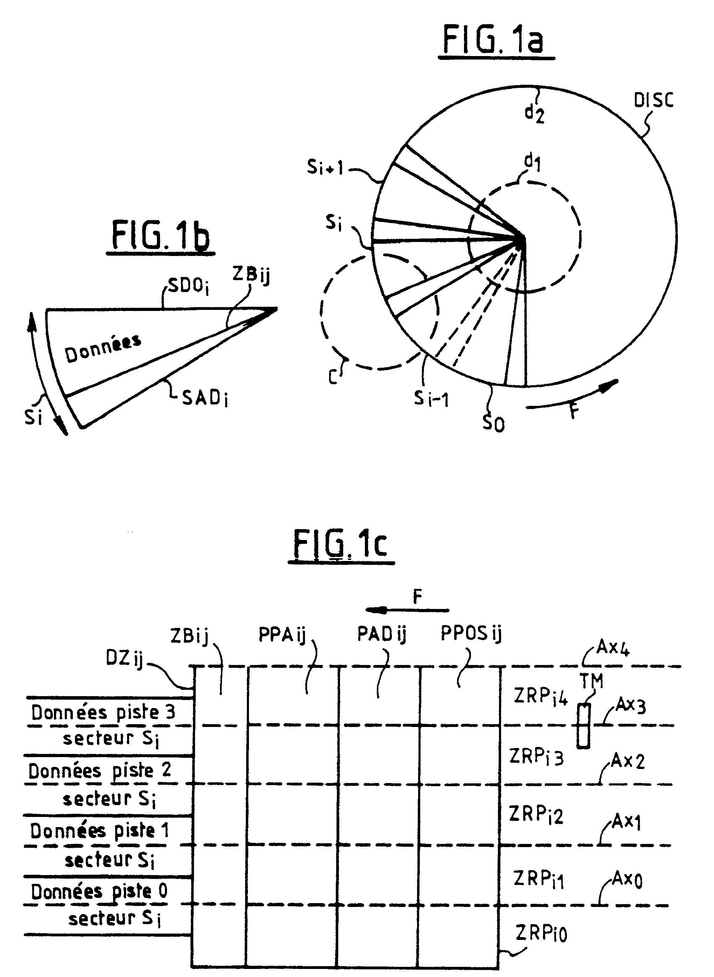

Afin de mieux comprendre comment sont écrites les informations de zones de référence d'un support d'enregistrement selon l'invention, il est nécessaire d'effectuer quelques rappels illustrés par les figures 1a, 1b, 1c montrant d'une part comment sont réparties les informations sur la surface d'un support d'enregistrement magnétique tel qu'un disque magnétique, selon l'art antérieur (figure 1a et figure 1b) et d'autre part quelques rappels illustrés par la figure 1c montrant comment sont réparties les informations à l'intérieur des zones de référence, selon ce même art antérieur.

Aux figures 1a à 1c, on suppose qu'on écrit des informations dans les zones de référence d'un disque magnétique DISC.

A la figure 1a, ce disque DISC tourne dans le sens de la flèche F. Sa surface utile d'enregistrement est délimitée par les cercles $d_1$, $d_2$. On définit sur le disque DISC p secteurs circulaires égaux et adjacents $S_0$, $S_1$, ..., $S_i$, ..., $S_p$. Ainsi qu'on peut mieux le voir à la figure 1b, chaque secteur $S_i$ est divisé en deux parties $SDO_i$, $SAD_i$ où sont respectivement enregistrées, d'une part, les données à traiter et d'autre part les informations d'adresse et de position fine. La surface de la partie $SAD_i$ est très inférieure à la surface de la partie $SDO_i$ (quelques pour cent).

Chaque partie $SAD_i$ d'un secteur déterminé $S_i$ est divisé en $N' = (N + 1)$ zones de référence $ZRP_{i0}$, ..., $ZRP_{ij}$, ... $ZRP_{i(N)}$, N étant le nombre total de pistes d'enregistrement du disque DISC. Pour simplifier, on n'a représenté que les zones de référence $ZRP_{i0}$ à $ZRP_{i4}$ aux figures 1b et 1c, ces zones étant symbolisées par des rectangles à la figure 1c.

Les frontières entre les différentes zones de référence $ZRP_{ij}$ sont confondues avec les cercles $Ax_j$ définissant le milieu d'une piste d'enregistrement du disque magnétique DISC. On voit que dans chaque secteur $S_i$, à la piste de numéro d'ordre j, sont associées les zones de référence $ZRP_{ij}$ et $ZRP_{i(j+1)}$. Ainsi, à la piste de numéro d'ordre zéro, sont associées les deux zones de référence $ZRP_{i0}$ et $ZRP_{i1}$, à la piste de numéro d'ordre 1 sont associées les zones de référence $ZRP_{i1}$, $ZRP_{i2}$ et ainsi de suite.

La figure 1c montre de manière plus précise la nature des informations contenues dans chaque zone de référence $ZRP_{ij}$, et comment ces informations sont réparties à l'intérieur de la zone (selon le brevet 2439435 précité).

La zone dite zone de blanc $ZB_{ij}$ où l'aimantation est uniforme (généralement nulle) précède la zone de référence $ZRP_{ij}$, ce qui permet de repérer de manière plus aisée le début de la zone $DZ_{ij}$ qui est indiqué le plus souvent par la première transition et éventuellement la seconde transition de la première partie $PPA_{ij}$ de la zone définie ci-dessous. La zone de référence $ZRP_{ij}$ comprend trois parties $PPA_{ij}$, $PAD_{ij}$, $PPOS_{ij}$ comportant chacune un nombre identique d'informations binaires (par exemple une dizaine) contenues chacune dans une cellule d'informations. La première partie appelée $PPA_{ij}$ comprend les informations de préambule (définies plus haut).

La partie $PAD_{ij}$ comprend un certain nombre d'informations définissant l'adresse absolue de la piste (ce nombre est bien entendu fonction du nombre total de pistes contenues sur le disque). La partie $PPOS_{ij}$ comprend un certain nombre d'informations de position fine permettant de maintenir le transducteur de lecture associé au disque DISC parfaitement centré au-dessus de la piste de numéro d'ordre j, en regard de laquelle il se trouve. Ceci permet une plus grande précision de lecture des données par le transducteur.

Chaque information binaire peut être constituée soit par une simple transition magnétique, soit par une double transition magnétique.

Ainsi qu'il a été indiqué plus haut, étant donné le taux d'erreurs relativement élevé de l'écriture d'informations sur les disques des mémoires magnétooptiques (de l'ordre de $10^5$), le mode de détection de la zone de référence utilisant la première, voire la seconde transition magnétique de la première partie $PPA_{ij}$ se révèle insuffisant.

Le mode d'écriture des informations à l'intérieur des zones de référence selon l'invention permet d'éviter cet inconvénient et est particulièrement bien adapté pour être utilisé dans les disques des mémoires magnétooptiques appelés disques magnétooptiques pour simplifier. On supposera donc par la suite que le disque DISC est magnétooptique.

A l'intérieur de chaque zone de référence $ZRP_{ij}$, chaque information binaire est constituée par un domaine magnétique d'aimantation, soit positive, soit négative. La valeur de chaque information est fonction du signe de l'aimantation dans chaque domaine (ce dernier constitue donc une cellule contenant une information binaire). Ainsi, par exemple, à un domaine d'aimantation positive, correspond une information binaire égale au 1 logique, alors qu'à une aimantation négative correspond une information binaire égale au 0 logique.

Ainsi, on voit donc que les informations binaires ne sont plus constituées par des transitions magnétiques, mais sont constituées directement par le signe de l'aimantation à l'intérieur de chaque domaine magnétique élémentaire.

Chaque zone de référence $ZRP_{ij}$ comprend :

A) une première partie, encore appelée premier groupe d'informations $GCP_{ij}$ contenant une pluralité de domaines magnétiques qui comprend elle-même respectivement :

1° Un groupe d'informations de préambule $ZPA_{ij}$ comportant :

a) un sous groupe $ZSY_{ij}$ comprenant des informations de synchronisation permettant de repérer avec précision le début de la zone de référence $ZRP_{ij}$,

b) un sous-groupe $ZCA_{ij}$ dont la lecture permet d'établir le gain des amplificateurs des circuits de lecture des informations contenues sur le disque DISC,

2° Un groupe d'informations d'adresses $ZAD_{ij}$. Comme dans les zones de référence $ZRP_{ij}$ selon l'art antérieur, l'adresse est une adresse absolue et est écrite en code Gray.

La première partie $GCP_{ij}$ est précédée de la zone de blanc $ZBL_{ij}$.

Le sous-groupe d'informations $ZCA_{ij}$ contient six couples de bits égaux à 1 et 0. Ce dernier est donc constitué d'une suite de 1 et de 0, soit une suite de six couples constitués par un domaine magnétique d'aimantation positive suivie d'un domaine magnétique d'aimantation négative.

Quant au groupe d'informations d'adresses, il contient par exemple 16 bits, ce qui permet de dénombrer $2^{16}$ pistes (environ 65.000 pistes adressables).

B) une seconde partie également appelée second groupe d'informations, à savoir $GDP_{ij}$.

Pour des raisons qui sont expliquées dans la demande de brevet français déposée conjointement avec la présente demande, la première partie est telle que les domaines magnétiques qui la constituent ont sensiblement même largeur que la piste de données de numéro d'ordre j et ont même milieu. En d'autres termes, le cercle qui constitue le milieu de la piste de numéro d'ordre j est confondu avec le cercle qui constitue le milieu de la première partie de la zone de référence GCP$_{ij}$. On dit également que cette première partie de la zone de référence ZRP$_{ij}$ est centrée "pleine piste".

Pour ce qui concerne la seconde partie GDP$_{ij}$, celle-ci est décentrée par rapport aux pistes de données de numéro d'ordre j. Ainsi chaque seconde partie GDP$_{ij}$ est décentrée d'une largeur égale à celle d'une demi-piste par rapport aux pistes de numéro d'ordre j, ce qui signifie que la frontière entre deux secondes parties GDP$_{ij}$, et GDP$_{i(j+1)}$, ou entre GDP$_{ij}$ et GDP$_{i(j-1)}$ est confondue respectivement avec le milieu de la piste j et le milieu de la piste (j – 1).

Dans une forme de réalisation préférée de l'invention, le sous-groupe d'informations de synchronisation ZSY$_{ij}$ est constitué par une séquence binaire pseudo-aléatoire, c'est-à-dire, de longueur finie, c'est-à-dire comprenant un nombre fini de bits, la détection de cette séquence binaire étant réalisée par corrélation entre d'une part une séquence de référence identique à la dite séquence binaire et mémorisée dans les circuits de gestion de la mémoire à disque magnétooptique contenant le disque DISC et d'autre part la séquence de bits ZSY$_{ij}$ lue par le dispositif optique de lecture de la mémoire à disque magnétooptique.

Le mode de détection d'une séquence de bits par autocorrélation est bien connu, il est par exemple décrit dans le livre "Commande et régulation par calculateur numérique", publié aux Editions EYROLLES dont les auteurs sont C. FOULARD, S. GENTIL, et G.P. SANDRAZ.

On rappelle que la détection par corrélation s'effectue en calculant la fonction d'autocorrélation suivante $\varphi_{XX}(\tau)$, avec :

$$\varphi_{XX}(\tau) = 1/T \int_0^T x(t)\, x(t + \tau)\, dt \quad (1)$$

où T est le temps d'intégration.
où x(t) est la fonction correspondant à la séquence de référence et x(t + τ) est la fonction correspondant à la séquence lue par le dispositif optique de lecture lorsqu'il se trouve en regard d'un sous-groupe d'informations de synchronisation ZSY$_{ij}$.

τ est le décalage temporel entre les deux fonctions x(t) et x(t + τ), avec x(t) ou x(t + τ) ε { – 1 ; + 1}

Cette fonction d'autocorrélation est égale à 1 si le décalage temporel τ est nul et voisine de 0 si τ est différent de 0.

Dans la pratique, on calcule en fait la fonction $\varphi_{XX}(n)$ qui est donné par l'équation suivante :

$$\varphi_{XX}(n) = \frac{1}{N} \sum_{k=1}^{N} a_k \oplus a_{(k+n)} \quad (2) \begin{cases} = 1 \ si \ n = 0 \\ = 0 \ si \ n \neq 0 \end{cases}$$

où n est un nombre d'échantillons de retard correspondant au décalage temporel τ. Si T$_0$ est la période d'échantillonage (voir plus loin) durée de chaque échantillon de retard, on a sensiblement nT$_0$ = τ
avec

$$a_k \, \varepsilon \, \{0 ; 1\} \quad (3)$$

La séquence de synchronisation est définie par le polynôme R suivant (se reporter également au livre précité) tel que l'on ait :

$$0 = 1 \oplus R \oplus R^4 \quad (4)$$

ou encore :

$$R_{1(k+1)} = R_{1(k)} \oplus R_{4(k)} \quad (5),$$

les expressions (4) et (5) étant équivalentes.

Dans un exemple préféré de réalisation de l'invention, les différentes valeurs successives des bits cons-

5

tituant la séquence, sont choisies comme étant les valeurs $R_1(k)$, ces valeurs étant calculées à partir des bases de départ suivantes :

$$R_1(0) = 1$$

$$R_2(0) = R_3(0) = R_4(0) = 0 \quad (6)$$

$$R_2(k + 1) = R_1(k)$$

$$R_3(k + 1) = R_2(k) \quad (7)$$

$$R_4(k + 1) = R_3(k)$$

Après différents essais et simulations effectués sur ordinateur, il a été trouvé qu'une séquence binaire pseudo-aléatoire de 15 bits était convenable et permettait une détection précise de la zone de référence $ZRP_{ij}$ permettant d'absorber toutes les erreurs éventuelles contenues dans la séquence, avec une bonne fonction d'autocorrélation voisine de 70% (0,7).

Cette séquence binaire est la suivante :

111101011001000

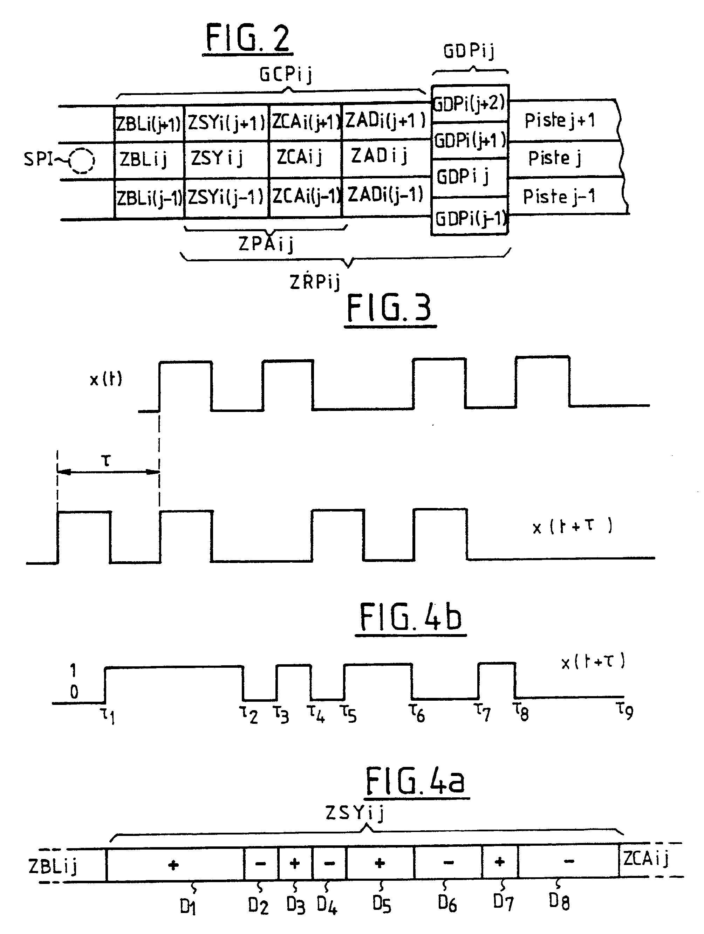

Le sous-groupe d'informations de synchronisation $ZSY_{ij}$ constitué par la séquence écrite ci-dessus est représenté à la figure 4a, il comprend une succession de domaines magnétiques $D_1$, $D_2$, .......... à $D_8$.

Les domaines $D_1$, $D_3$, $D_5$, $D_7$ ont une aimantation positive, alors que les domaines $D_2$, $D_4$, $D_6$, $D_8$ ont des aimantations négatives.

On sait que pour faciliter la reconnaissance des informations dans une zone de référence (et plus généralement de toutes les données contenues sur un disque magnétique ou magnétooptique), on écrit les bits d'informations à l'intérieur de cellules de bits ayant même longueur L (et donc par conséquent, la durée de lecture de ces cellules est la même, c'est-à-dire, $T_{nom}$). Les bits sont donc inscrits à l'intérieur de ces cellules de bits avec une valeur déterminée.

Il est donc clair que le domaine $D_1$ d'aimantation positive a une longueur égale à 4L alors que le domaine $D_3$ a une longueur égale à L, le domaine $D_5$ a une longueur égale à 2L et le domaine $D_7$ à une longueur égale à L.

Les domaines magnétiques d'aimantation négative $D_2$, $D_4$, $D_6$ et $D_8$ ont respectivement des longueurs égales à L, L, 2L, 3L.

De la même façon, si l'on considère la fonction $x(t + \tau)$ représentée à la figure 4b, qui correspond aux informations lues par le dispositif optique de lecture de la mémoire à disque et qui sont mises en forme par les circuits de lecture associés à ce dispositif optique de lecture, cette fonction est égale au 1 logique entre les instants $\tau_1$ et $\tau_2$ (ce qui correspond au temps de lecture du domaine magnétique $D_1$), entre les instants $\tau_3$ et les instants $\tau_4$ (lecture du domaine $D_3$,), entre les instants $\tau_5$ et $\tau_6$ (lecture du domaine $D_5$), entre les instants $\tau_7$ et $\tau_8$ (lecture du domaine $D_7$).

La fonction $x_{(t+\tau)}$ est égale au 0 logique entre les instants $\tau_2$ et $\tau_3$ (lecture du domaine magnétique $D_2$) entre les instants $\tau_4$ et $\tau_5$ (lecture du domaine $D_4$), entre les instants $\tau_6$ et $\tau_7$ (lecture du domaine $D_6$), et à partir de l'instant $\tau_8$ jusqu'à l'instant $\tau_9$ qui représente l'instant où s'arrête la lecture de la séquence.

On a donc :

$$\tau_1 - \tau_2 = 4T_{nom}$$

$$\tau_3 - \tau_2 = T_{nom}$$

$$\tau_4 - \tau_3 = T_{nom}$$

$$\tau_5 - \tau_4 = T_{nom}$$

$$\tau_6 - \tau_5 = 2T_{nom}$$

$$\tau_7 \ \tau_6 = 2T_{nom}$$

$$\tau_8 - \tau_7 = T_{nom}$$

$$\tau_9 - \tau_8 = 3T_{nom}$$

Dans la pratique, pour reconnaître les différents bits de la séquence binaire contenue dans le sous-groupe $ZSY_{ij}$, on utilise une horloge d'échantillonnage (contenue dans les circuits de gestion de la mémoire magnétooptique) dont la période $T_0$ est inférieure à la période $T_{nom}$, cette dernière étant également appelée période de bit.

L'échantillonnage de cette séquence binaire d'informations de synchronisation est effectuée à partir d'un instant $t_i$ initial (voir figure 7) qui se situe dans l'intervalle de temps où le dispositif optique de lecture de la mémoire magnéto-optique se trouve en regard de la zone de blanc $ZBL_{ij}$.

Lors de ces instants d'échantillonnage identifiés par k, on peut déterminer les valeurs des coefficients $a_k$ et $a_{k+n}$ et par suite calculer la fonction d'autocorrélation au moyen de circuits OU contenus dans les circuits de gestion de la mémoire à disque magnétooptique.

Dès que la fonction d'autocorrélation a atteint une certaine valeur (0,7, voir plus haut), on dit que la zone de référence $ZRP_{ij}$ est détectée, ceci s'effectuant en l'instant $t_d$. Une horloge $H_S$ dite horloge "servo" dont la période est égale à la période de bit, soit $T_{nom}$ est déclenchée, immédiatement après l'instant $t_d$, à l'intérieur d'un intervalle de temps n'excédant pas 0,5 $T_{nom}$. Cette horloge servo est bien entendu de type connu et est contenue dans lesdits circuits de gestion (voir figure 7).

Le rapport entre la période d'échantillonnage $T_0$ du sous-groupe d'informations de synchronisation et la période de bits $T_{nom}$ est établie en utilisant le raisonnement qui suit :

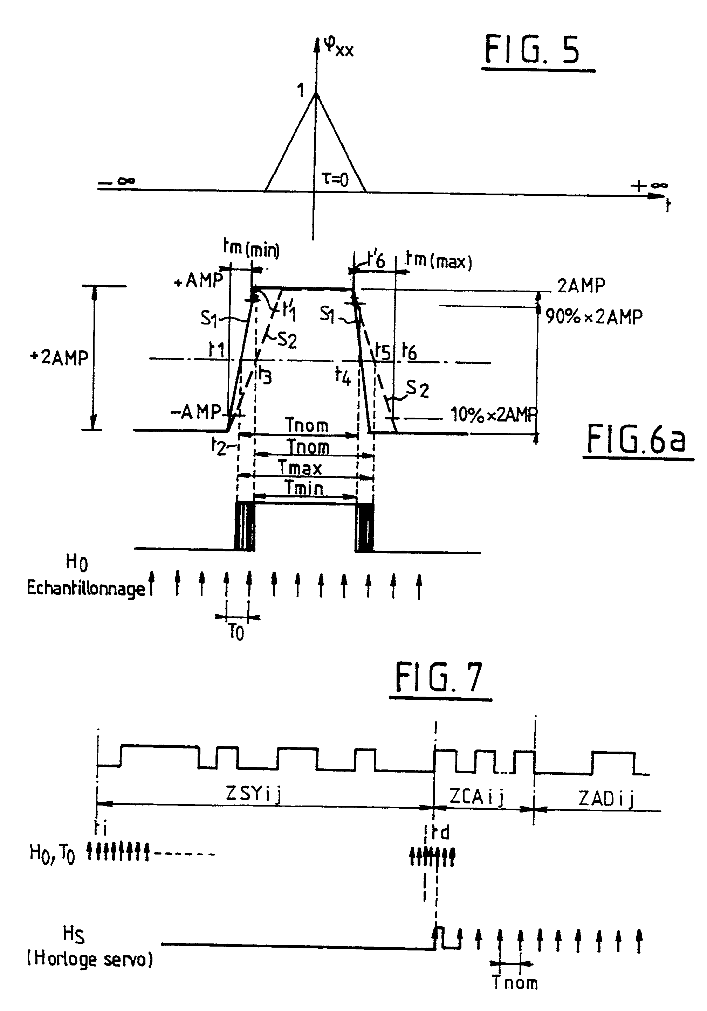

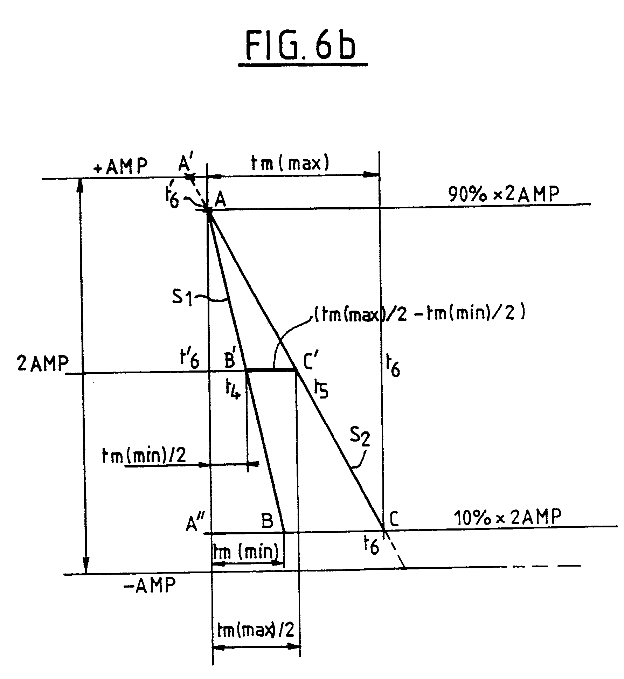

Dans la pratique, si l'on considère des transitions magnétiques correspondantes de deux zones de référence voisines $ZRP_{ij}$ et $ZRP_{i(j+1)}$, (c'est-à-dire occupant la même position à l'intérieur de chacune de ces deux zones) celles-ci ne sont pas parfaitement alignées entre elles (c'est-à-dire ne sont pas situées sur le même rayon-vecteur). Ceci est dû à l'imprécision avec laquelle est positionné le transducteur magnétique d'écriture au-dessus du disque d'une part, et d'autre part à l'imprécision dans la détermination de l'instant où l'on écrit une transition magnétique. Il en résulte que, fonction du temps, le signal S de lecture d'une transition déterminée d'une zone de référence $ZRP_{ij}$ a une forme qui varie d'une zone à l'autre et qui dépend d'une part de la manière dont à été écrite la transition magnétique entre les deux domaines magnétiques successifs qui l'entourent, et d'autre part de la manière dont elle est lue. Ce signal a donc une forme d'onde qui varie entre la forme $S_1$ et la forme $S_2$ montrée à la figure 6.

Le signal S a une forme sensiblement trapézoïdale.

A la figure 6a, il a été supposé que les signaux S, $S_1$, $S_2$ sont ramenés à la même origine des temps $t_0$, pour mieux faire comprendre le raisonnement qui suit :

On désigne par + AMP, le signal positif de crête des signaux S, $S_1$, $S_2$ et par − AMP le signal négatif de crête. L'amplitude de crête à crête est donc + 2 AMP (figures 6a et 6b). Comme il est d'usage dans la pratique, on considère les instants $t_1$ et $t'_1$ où le signal $S_1$ a respectivement une amplitude égale à 10 et 90% de l'amplitude crête à crête du signal (le signal $S_1$ est celui qui a le temps de montée minimum) et les instants $t'_6$ et $t_6$ où le signal $S_2$ a respectivement une amplitude égale à 90% et 10% de l'amplitude crête à crête (le signal $S_2$ est celui qui a le temps de descente maximum).

Pratiquement, on considère que $t_1$ est également l'instant où $S_2$ a une amplitude égale à 10% de l'amplitude crête à crête et que $t_6$ est l'instant où $S_1$ à une amplitude égale à 90% de l'amplitude crête à crête (bien que cela ne soit pas, bien entendu rigoureusement exact, on considère que ceci est vrai avc une approximation suffisante).

C'est la raison pour laquelle, à la figure 6b, agrandissement de la figure 6a dans sa partie droite, on suppose que $S_1$ est représenté par les deux segments A'A et AB (alors qu'en réalité $S_1$ est défini par le segment A'B, mais il est clair que A'B est pratiquement confondu avec la ligne brisée A'AB).

On verra que cette approximation rend plus aisés les calculs qui seront effectués plus loin.

Si $t_2$ et $t_4$ sont les instants où le signal $S_1$ passe par la valeur 0, et $t_3$ et $t_5$ les instants où le signal $S_2$ passe par cette même valeur 0, on a pratiquement :

$$T_{nom} = t_4 - t_2 = t_5 - t_3$$

On pose :

$$T_{max} = t_5 - t_2$$

et,

$$T_{min} = t_4 - t_3$$

7

La durée réelle du signal correspondant à un bit élémentaire va donc être comprise entre $T_{min}$ et $T_{max}$ ce qui se traduit par l'équation (8).

on a :

$$T_{min} < T_{nom} < T_{max} \quad (8)$$

On considère la figure 6b

On a

$$T_{min} = t_4 - t_3 = t_5 - t_3 - (t_5 - t_4)$$

donc

$$T_{min} = T_{nom} - (t_5 - t_4)$$

Dans le triangle ABC, on a :

$B'C' = BC/2$, puisque $B'$ et $C'$ sont les milieux de AB et AC, avec $B'C' = t_5 - t_4$.

Si $A''$ est la projection de A sur BC, on a :

$$BC = A''C - A''B$$

$A''C$ et $A''B$ sont respectivement les temps de descente maximum et minimum. Les signaux $S_1$ et $S_2$ étant pratiquement symétriques (trapèzes isocèles), $A''C$ et $A''B$ sont aussi les temps de montée maximum et minimum et sont désignés par $t_{m(max)}$ et $t_{m(min)}$, on a :

$$A''C = t_6 - t'_6 = t_{m(max)}$$

$$A''B = t'_1 - t_1 = t_{m(min)}$$

On a donc :

$$B'C' = t_{m(max)}/2 - t_{m(min)}/2 = t_5 - t_4$$

d'où

$$\begin{aligned}
T_{min} &= T_{nom} - (t_{m(max)}/2 - t_{m(min)}/2) \\
T_{max} &= t_5 - t_2 = t_4 - t_2 + (t_5 - t_4) \\
&= T_{nom} + (t_5 - t_4) \\
&= T_{nom} + (t_{m(max)}/2 - t_{m(min)}/2)
\end{aligned}$$

Posons

$$\Delta t_m = t_{m(max)} - t_{m(min)} \quad (11)$$

On a donc :

$$T_{min} = T_{nom} - \Delta t_m/2 \quad (12)$$

$$T_{max} = T_{nom} + \Delta t_m/2 \quad (13)$$

On veut définir un temps T tel que :

$T = nT_0$, ($T_0$ : période d'échantillonnage) et n entier positif.

Selon la phase de l'échantillonage par rapport au signal, le nombre d'échantillons n dans $T_x$ sera donné par :

$$n = Ent (T_x/T_0) \quad (15)$$

8

ou

$$n = \text{Ent} (T_x/T_0) + 1 \quad (16)$$

où Ent désigne la fonction : "entier de".

Si l'on veut limiter l'incertitude sur n à la valeur $n_1$ ou $n_1 + 1$, (c'est-à-dire que n soit égal à $n_1$ ou $n_1 + 1$), il faut que

$$\text{Ent} (T_x/T_0) = n_1 \quad (17)$$

pour :

$$T_{nom} - \Delta t_m/2 < T_x < T_{nom} + \Delta t_m/2,$$

on cherche à ce que $n_1$ soit un nombre entier positif indépendant de $\Delta t_m/2T_0$, c'est-à-dire que :

$$n_1 = \text{Ent} (T_x/T_0) \quad n_1 = \text{Ent} [(T_{nom}/T_0)] \pm (\Delta t_m/2T_0)] \quad (18)$$

quel que soit $\Delta t_m/2T_0$

Ceci est obtenu si :

$$|\Delta t_m/2T_0| < 0.5 \text{ et } T_{nom}/T_0 = (2k + 1)/2 \quad (19)$$

avec k entier positif, ou encore, $T_0 > |\Delta t_m|$

Alors $n_1$ est parfaitement défini quelque soit $T_x$

En effet :

$$(T_{nom}/T_0) = (2k + 1)/2 \; \varepsilon \; \{0.5, 1.5, 2.5...\}$$

avec $|\Delta t_m/2T_0| < 0.5$ on est assuré que :

$$\text{Ent} (1.5 + |\Delta t_m/2T_0|) = 1$$

ou que :

$$\text{Ent} (2.5 + |\Delta t_m/2T_0|) = 2$$

etc...

Des essais expérimentaux ont montré par exemple que l'on avait respectivement $t_{m(max)}$ et $t_{m(min)}$ de l'ordre de 95 et 57 nano-secondes, ce qui donne $\Delta t_m$ de l'ordre de 38 nano-secondes.

Par ailleurs, la période de bit $T_{nom}$ est égale à $T_0 \times (2k + 1)/2$ avec k pouvant prendre les valeurs 1, 2, 3, etc...

Si l'on prend $T_0$ = 50 nano-secondes, la période de bit peut prendre les valeurs 75, 125, 175, 225, etc... nano-secondes.

On voit que la période de bits $T_{nom}$ est égale à un multiple impair de la demi-période d'échantillonnage $T_0$ de synchronisation.

Avec un taux de corrélation de 70%, on choisit de préférence une valeur de k égale à 4, ce qui donne une période de bit $T_{nom}$ de 225 nano-secondes et permet de déterminer avec suffisamment de précision le début de la zone de référence, c'est-à-dire, l'instant $t_d$ tel que montré à la figure 7. Sur cette même figure 7, on a représenté différentes formes d'ondes correspondant aux signaux lus par le dispositif optique de lecture lorsque celui-ci est en regard successivement des sous-groupes de synchronisation $ZSY_{ij}$ et de préambule $ZCA_{ij}$ et du groupe d'adresses $ZAD_{ij}$.

## Revendications

1. Mode d'écriture d'informations de synchronisation sur un support d'enregistrement magnétique (DISC) où les informations sont écrites en code binaire et réparties sur une pluralité N de pistes, chaque piste étant associée à au moins une zone de référence ($ZRP_{ij}$) qui comprend un groupe d'informations de préambule ($ZSY_{ij}$

+ ZCA$_{ij}$) un groupe d'informations d'adresses absolues (ZAD$_{ij}$) et un groupe d'informations de position fine (GDP$_{ij}$), le groupe d'informations de préambule comprenant un premier sous-groupe (ZSY$_{ij}$) d'informations de synchronisation précédant un second sous-groupe de contrôle automatique de gain (ZCA$_{ij}$), caractérisé en ce que le sous-groupe d'informations de synchronisation (ZSY$_{ij}$) est constitué par une séquence binaire pseudo-aléatoire pour laquelle la fonction d'autocorrélation est pratiquement nulle lorsque le décalage temporel ($\tau$) entre d'une part, la séquence de signaux lue par le dispositif de lecture du support correspondant à la dite séquence binaire, et d'autre part, une séquence de référence contenu dans les circuits de gestion de la mémoire contenant le support d'enregistrement magnétique, n'est pas nul, cette fonction étant voisine de 1 si ce décalage ($\tau$) est quasiment nul.

2. Mode d'écriture selon la revendication 2, caractérisé en ce que la séquence binaire pseudo-aléatoire est définie par le polynôme R :

$$0 = 1 \oplus R \oplus R^4,$$

ou encore,

$$R_{1(k+1)} = R_{1(k)} \oplus R_{4(k)}$$

où k est un entier positif non nul.

3. Mode d'écriture suivant la revendication 3 caractérisé en ce que la valeur de chacun des bits de la séquence est donnée par les polynômes R$_{1(k)}$ avec :

$$R_1(0) = 1 \; ; \; R_2(0) = R_3(0) = R_4(0) = 0 \; et \; R_{2(k+1)} = R_{1(k)}, \; R_{3(k+1)} = R_{2(k)} \; ; \; R_{4(k+1)} = R_{3(k)}.$$

4. Mode d'écriture suivant l'une des revendications 1, 2, 3, 4, caractérisé en ce que le groupe d'informations de préambule précède le groupe d'informations d'adresses et forme avec celui-ci une première partie de la zone de référence (GCP$_{ij}$) qui est disposée et centrée sur la piste de numéro d'ordre j, alors que les informations de position fine forment une seconde partie (GDP$_{ij}$) décalée par rapport au milieu de cette même piste d'un même côté de celle-ci, de telle sorte que la frontière entre deux secondes parties appartenant à deux zones de référence voisines est confondue avec le milieu de la piste de numéro d'ordre j.

5. Mode d'écriture suivant l'une des revendications 1, 2, 3, 4, caractérisé en ce que la période d'échantillonnage (T$_0$) du sous-groupe d'informations de synchronisation (ZSY$_{ij}$) et la période de bit (T$_{nom}$) commune à tout les bits enregistrés dans la zone de référence (ZRP$_{ij}$) sont telles que la période de bit est un multiple impair de la période d'échantillonnage (T$_0$).

6. Mémoire magnétooptique comprenant un disque magnétooptique et des circuits de gestion mémorisant la séquence binaire pseudo-aléatoire écrite selon la revendication 2.

## Patentansprüche

1. Verfahren zum Schreiben von Synchronisierungsinformationen auf einen magnetischen Datenträger (DISC), auf den die Informationen im Binärcode geschrieben werden und auf einer Mehrzahl N von Spuren verteilt sind, wobei jede Spur wenigstens einem Referenzbereich (ZRP$_{ij}$) zugeordnet ist, der eine Gruppe von Kopfinformationen (ZSY$_{ij}$ + ZCA$_{ij}$), eine Gruppe von Absolutadressen-Informationen (ZAD$_{ij}$) und eine Gruppe von Endpositionsinformationen (GDP$_{ij}$) aufweist, wobei die Gruppe von Kopfinformationen eine erste Untergruppe (ZSY$_{ij}$) von Synchronisierungsinformationen aufweist, die einer zweiten Untergruppe zur automatischen Verstärkungssteuerung (ZCA$_{ij}$) vorhergeht, dadurch gekennzeichnet, daß die Untergruppe der Synchronisierungsinformationen (ZSY$_{ij}$) durch eine pseudozufällige Binärfolge gebildet wird, für die die Autokorrelationsfunktion im wesentlichen Null ist, wenn die zeitliche Verschiebung ($\lambda$) zwischen einerseits der der Binärfolge entsprechenden Signalfolge, die von der Vorrichtung zum Lesen des Trägers gelesen wird, und andererseits einer Bezugsfolge, die in den Steuerschaltungen des den magnetischen Datenträger enthaltenden Speichers enthalten ist, von Null verschieden ist, wobei diese Funktion in der Umgebung von 1 liegt, falls diese Verschiebung ($\lambda$) im wesentlichen Null ist.

2. Schreibverfahren gemäß Anspruch 2, dadurch gekennzeichnet, daß die pseudozufällige Binärfolge durch das Polynom R definiert wird :

$$0 = 1 + R + R^4,$$

oder

$$R_{1(k+1)} = R_{1(k)} + R_{4(k)},$$

wobei k eine von Null verschiedene, positive ganze Zahl ist.

3. Schreibverfahren gemäß Anspruch 2, dadurch gekennzeichnet, daß der Wert eines jeden der Bits der Folge durch die Polynome $R_{1(k)}$ gegeben ist, mit :

$$R_1(0) = 1 \; ; \; R_2(0) = R_3(0) = R_4(0) = 0 \; \text{und} \; R_{2(k+1)} = R_{1(k)}, \; R_{3(k+1)} = R_{2(k)} \; ; \; R_{4(k+1)} = R_{3(k)}.$$

4. Schreibverfahren gemäß einen der Ansprüche 1, 2 oder 3, dadurch gekennzeichnet, daß die Gruppe der Kopfinformationen der Gruppe der Adresseninformationen vorhergeht und mit dieser einen ersten Teil des Referenzbereichs ($GCP_{ij}$) bildet, der auf der Spur mit der Ordnungszahl j angeordnet und zentriert ist, während die Endpositionsinformationen einen zweiten Teil ($GDP_{ij}$) bilden, der in bezug auf die Mitte dieser selben Spur zur selben Seite verschoben ist, derart, daß die Grenze zwischen zwei zweiten Teilen, die zwei benachbarten Referenzbereichen zugehören, mit der Mitte der Spur der Ordnungazahl j zur Deckung kommt.

5. Schreibverfahren gemäß einem der Ansprüche 1, 2, 3 oder 4, dadurch gekennzeichnet, daß die Abtastperiode ($T_0$) der Untergruppe der Synchronisierungsinformationen ($ZSY_{ij}$) und die Bitperiode ($T_{nom}$), die sämtlichen in den Referenzbereich ($ZRP_{ij}$) eingetragenen Bits gemeinsam ist, derart sind, daß die Bitperiode ein ungeradzahliges Vielfaches der Abtastperiode ($T_0$) ist.

6. Magnetooptischer Speicher mit einer magnetooptischen Platte und Steuerschaltungen zum Speichern der pseudozufälligen Binärfolge, die gemäß Anspruch 2 geschrieben wird.

## Claims

1. A mode of writing synchronizing data on a magnetic recording carrier (DISC) where the data are written in binary code and distributed over a plurality N of tracks, each track being associated with at least one reference zone ($ZRP_{ij}$) which includes a group of preamble data ($ZSY_{ij} + ZCA_{ij}$), a group of absolute address data ($ZAD_{ij}$) and a group of fine-position data ($GDP_{ij}$), the group of preamble data including a first subgroup ($ZSY_{ij}$) of synchronizing data preceding a second subgroup of automatic gain control ($ZCA_{ij}$), characterized in that the synchronizing data subgroup ($ZSY_{ij}$) comprises a pseudo-random binary sequence for which the function of autocorrelation is practically zero when the temporal offset ($\tau$) between, on the one hand, the sequence of signals read by the reading device of the carrier corresponding to said binary sequence, and on the other hand, a reference sequence contained in the housekeeping circuits of the memory containing the magnetic recording carrier, is not zero, this function being in the vicinity of 1 if the offset ($\tau$) is quasi-zero.

2. A writing mode according to claim 1, characterized in that the pseudo-random binary sequence is defined by the polynomial R :

$$0 = 1 \oplus R \oplus R^4,$$

or,

$$R_{1(k+1)} = R_{1(k)} \oplus R_{4(k)}$$

where k is a non-zero positive integer.

3. A mode of writing according to claim 2, characterized in that the value of each of the bits of the sequence is given by the polynomials $R_{1(k)}$, with :
$R_1(0) = 1 \; ; \; R_2(0) = R_3(0) = R_4(0) = 0$, and
$R_{2(k+1)} = R_{1(k)}, \; R_{3(k+1)} = R_{2(k)} \; ;$
$R_{4(k+1)} = R_{3(k)}.$

4. A mode of writing according to one of claims 1,2,3, characterized in that the group of preamble data precedes the group of address data and with it forms a first portion of the reference zone ($GCP_{ij}$) which is disposed and centred on the track of serial number j, while the fine-position data form a second portion ($GDP_{ij}$) offset with respect to the centre of this same track on the same side therof, such that the boundary between two second portions belonging to two adjacent reference zones coincides with the center of the track of serial number j.

5. A mode of writing according to one of claims 1, 2, 3, 4, characterized in that the sampling period ($T_0$) of

the synchronization data subgroup ($ZSY_{ij}$) and the bit period ($T_{nom}$) common to all the bits recorded in the reference zone ($ZRP_{ij}$) are such that the bit period is an uneven multiple of the sampling period ($T_0$).

6. A magnetooptical memory including a magnetooptical disk and housekeeping circuits that memorize the pseudo-random binary sequence written in accordance with claim 2.

## FIG. 1a

DISC

$d_2$

$S_{i+1}$

$d_1$

$S_i$

C

$S_{i-1}$

$S_0$

F

## FIG. 1b

$SDO_i$

$ZB_{ij}$

Données

$SAD_i$

$S_i$

## FIG. 1c

F

$DZ_{ij}$  $ZB_{ij}$  $PPA_{ij}$  $PAD_{ij}$  $PPOS_{ij}$

$Ax4$

$ZRP_{i4}$

TM

$Ax3$

Données piste 3
secteur $S_i$

$ZRP_{i3}$

$Ax2$

Données piste 2
secteur $S_i$

$ZRP_{i2}$

$Ax1$

Données piste 1
secteur $S_i$

$ZRP_{i1}$

$Ax0$

Données piste 0
secteur $S_i$

$ZRP_{i0}$

13

## FIG. 2

|  | ← GCPij → |  |  |  | GDPij |  |
|---|---|---|---|---|---|---|
|  | ZBLi(j+1) | ZSYi(j+1) | ZCAi(j+1) | ZADi(j+1) | GDPi(j+2) | Piste j+1 |
| SPI ⌷ | ZBLij | ZSYij | ZCAij | ZADij | GDPi(j+1) | Piste j |
|  | ZBLi(j-1) | ZSYi(j-1) | ZCAi(j-1) | ZADi(j-1) | GDPi j | Piste j-1 |
|  |  |  |  |  | GDPi(j-1) |  |

ZPAij

ZRPij

## FIG. 3

$x(t)$

$\tau$

$x(t+\tau)$

## FIG. 4b

1
0

$\tau_1$   $\tau_2$ $\tau_3$ $\tau_4$ $\tau_5$   $\tau_6$   $\tau_7$ $\tau_8$   $\tau_9$

$x(t+\tau)$

## FIG. 4a

ZSYij

| ZBLij | + | − | + | − | + | − | + | − | ZCAij |
|---|---|---|---|---|---|---|---|---|---|

$D_1$   $D_2$ $D_3$ $D_4$   $D_5$   $D_6$   $D_7$   $D_8$

14

EP 0 295 164 B1

FIG. 5

FIG. 6a

FIG. 7

# FIG.6b